# EUROPÄISCHE PATENTSCHRIFT

(11) **EP 2 178 989 B1**
(45) Veröffentlichungstag und Bekanntmachung des Hinweises auf die Patenterteilung: **21.12.2011**
(21) Anmeldenummer: 08801565.6
(22) Anmeldetag: 13.08.2008
(51) Int. Cl.: C09D 5/00

(54) **WÄSSERIGER BESCHICHTUNGSSTOFF, VERFAHREN ZU SEINER HERSTELLUNG UND SEINE VERWENDUNG**
AQUEOUS COATING MATERIAL, PROCESS FOR PRODUCTION THEREOF AND USE THEREOF
PRODUIT DE REVÊTEMENT AQUEUX, SON PROCÉDÉ DE FABRICATION ET SON UTILISATION

(30) Priorität: 14.08.2007 DE 102007038487
(43) Veröffentlichungstag der Anmeldung: 28.04.2010
(73) Patentinhaber: BASF Coatings GmbH, 48165 Münster (DE)
(72) Erfinder: STEINMETZ, Bernhard, 97535 Rütschenhausen (DE); SCHNEIDER, Claudia, 97450 Arnstein-Müdesheim (DE); KÜDDE, Anke, 97261 Güntersleben (DE)
(74) Vertreter: Leifert & Steffan
(86) Internationale Anmeldenummer: PCT/EP2008/006654
(87) Internationale Veröffentlichungsnummer: WO 2009/021724

(56) Entgegenhaltungen:
- EP-A- 1 762 588
- WO-A-03/080748
- DE-A1- 10 041 979
- DE-A1- 10 146 483
- DE-A1-102005 054 867
- DE-A1-102005 060 302
- US-B1- 6 281 272
- DATABASE WPI Week 200712 Thomson Scientific, London, GB; AN 2007-123822 XP002500382 & WO 2006/129804 A (MITSUBISHI CHEM CORP) 7. Dezember 2006 (2006-12-07)

## Beschreibung

### Gebiet der Erfindung

Die vorliegende Erfindung betrifft einen neuen wässrigen Beschichtungsstoff, enthaltend mindestens ein gesättigtes, ungesättigtes und/oder mit olefinisch ungesättigten Verbindungen gepfropftes, ionisch und/oder nicht ionisch stabilisiertes Polyurethan und mindestens ein organisches, aliphatisches, unfunktionalisiertes Lösemittel. Außerdem betrifft die vorliegende Erfindung ein neues Verfahren zur Herstellung eines wässrigen Beschichtungsstoffs. Des Weiteren betrifft die vorliegende Erfindung die Verwendung des neuen Beschichtungsstoffs und des nach dem neuen Verfahren hergestellten, wässrigen Beschichtungsstoffs.

### Stand der Technik

Wässrige Beschichtungsstoffe, enthaltend mindestens ein gesättigtes, ungesättigtes und/oder mit olefinisch ungesättigten Verbindungen gepfropftes, ionisch und/oder nicht ionisch stabilisiertes Polyurethan, sind bekannt. Sie können physikalisch, thermisch oder thermisch und mit aktinischer Strahlung gehärtet werden. Vorzugsweise enthalten sie farb- und/oder effektgebende Pigmente und werden zur Herstellung von farb- und/oder effektgebenden Lackierungen, insbesondere Basislackierungen im Rahmen von Mehrschichtlackierungen oder Unidecklackierungen, verwendet.

Die bekannten wässrigen Beschichtungsstoffe können organische Lösemittel, insbesondere hochsiedende organische Lösemittel, wie heterocyclische, aliphatische oder aromatische Kohlenwasserstoffe, ein- oder mehrwertige Alkohole, Ether, Ester und Ketone, wie z. B. N-Methylpyrrolidon, Toluol, Xylol, Butanol, Ethylen- und Butylglykol sowie deren Acetate, Butyldiglykol, Ethylenglykoldibutylether, Diethylenglykoldibutylether, Ethoxypropanol, Cyclohexanon, Methylethylketon, Aceton oder Isophoron, enthalten (vgl. die europäischen Patentanmeldungen EP 0 228 003 A1 und EP 0 634 431 A1).

Bedingt durch die sehr geringe Löslichkeit von Silikonen in Wasser und wässrigen Systemen, kann eine Kontamination von wässrigen Beschichtungsstoffen zu Benetzungsfehlern In der Lackierung führen. Dabei unterscheidet der Fachmann zwischen folgenden Phänomenen, die in einem Aufbau aus Basislack und Klarlack auftreten können.
- Benetzungsfehler des Klarlacks auf einem geschlossenen Basislackfilm (A-Krater).
- Benetzungsfehler sowohl des Klarlacks als auch des Basislacks auf einem geschlossenen Füllerfilm (C-Krater).
- Benetzungsfehler des Basislacks auf einem geschlossenem Füllerfilm, wobei der Klarlack über der Benetzungsfehlstelle einen geschlossenen Film bildet (D-Krater).

Bisher sind keine Schriften bekannt, In denen Mittel zur Minimierung oder Vermeidung der durch Sillkonkontamination hervorgerufenen Fehler beschrieben werden.

In JP 2000-246324 wird die Verwendung von hydrophoben organischen Lösemitteln zur Verbesserung der Reparierbarkeit und Wasserresistenz beschrieben. JP 2000-390442 beschreibt ebenfalls die Verwendung von aliphatischen Kohlenwasserstoffen zur Verbesserung der Wasserresistenz. Neben der Verbesserung der Wasserresistenz beschreibt US 1988-155458 weiterhin die Stabilisierung von unpolaren, organischen Polymeren in wässrigen Formulierungen durch Verwendung von hydrophoben organischen Lösemitteln. Diese Eigenschaft wird außerdem JP. 2000-369981 und JP 1977-41159 beschrieben.

Die deutsche Offenlegungsschrift DE 10 2005 060 302 A1 beschreibt einen wässrigen Beschichtungsstoff, der (A) mindestens ein gesättigtes, ungesättigtes und/oder mit olefinisch ungesättigten Verbindungen gepfropftes, ionisch und/oder nicht ionisch stabilisiertes Polyurethan, (B) mindestens ein Netz- oder Dispergierungsmittel und (C) mindestens ein organisches Lösemittel, ausgewählt aus der Gruppe, bestehend aus Dimethylsulfoxid, Sulfolan, 2-Methyl-1-butanol, 3-Methyl-1-butanol, 2-Methyl-1-pentanol, Hexylglykol, 1,6-Hexandiol, Diethylenglykol, Triethylenglykol, Glyzerin, Lösungen von Trimethylolpropan, Lösungen von Pentaerythrit, Lösungen von Sorbit, reaktiven Polyetherpolyolen eines zahlenmittleren Molekulargewichts von 110 bis 6000 Dalton und einer Hydroxylzahl von 25 bis 1000 mg KOH/g, Propylenglykolmonobutylether, Dipropylenglykoldimethylether, Glyzerinethoxylat, Ethyl-3-ethoxypropionat, gamma-Butyrolacton. N-(2-Hydroxyethyl)-piperidin, Mathylmorpholin, N-(2-Hydroxyethyl)-morpholin, N-Acetylmorpholin, N-Cyclohexylpyrrolidon und N-Octyl-2-pyrrolidon enthält.

Die deutsche Offenlegungsschrift DE 10 2005 054 867 A1 beschreibt physikalisch, thermisch und physikalisch und thermisch härtbare Metalleffekpigmente enthaltende, wässrige Gemische, enthaltend A) mindestens ein Polyurethan, ausgewählt aus der Gruppe, bestehend aus physikalisch härtbaren, thermisch selbstvernetzenden und/oder thermisch fremdvernetzenden, gesättigten, ungesättigten und/oder mit olefinisch ungesättigten Verbindungen gepfropften, Ionisch und/oder nichtionisch stabilisierten Polyurethanen, als Bindemittel und B) mindestens ein durch PVD-Verfahren hergestelltes blättchenförmiges Metalleffektpigment.

Die europäische Patentanmeldung EP 1 762 588 A1 beschreibt eine Beschichtung mit feuerhemmenden Eigenschaften.

Die WO 2006/129804 A beschreibt eine wässrige Harzdispersion, die erhalten wird durch Dispergierung eines Polymers in Wasser. Die wässrige Dispersion wird als Beschichtungsmittel eingesetzt und zeigt eine gute Haftung des Beschichtungsfilms.

Die Internationale Anmeldung WO 03/080748 A1 beschreibt ein Verfahren zur Fixierung von Makroobjekten auf einer elektrisch leitenden oder halbleitenden Oberfläche durch Elektropfropfung.

Die deutsche Offenlegungsschrift DE 101 46 483 A1 beschreibt einen farb- und/oder effektgebenden wässrigen Beschichtungsstoff, der (A) mindestens ein wasserdispergierbares und/oder verdünnbares Bindemittel, (B) mindestens ein farb- und/oder effektgebendes Pigment, (C) mindestens ein Schichtsilikat als Rheologiehilfsmittel und (D) mindestens einen anionischen Polyelektrolyten enthält.

Die deutsche Offenlegungsschrift DE 100 41 979 A1 beschreibt die Verwendung plättchenförmiger Effektpigmente auf der Basis von Eisenoxid mit Farbtönen von Rosa bis Braunrot für die Erhöhung des Deckvermögens farbgebender Beschichtungen mit Farbtönen, die sich von Rot über Orange bis nach Gelb oder von Rot bis Violett erstrecken, sowie die farbgebenden Beschichtungsstoffe und die farbgebenden Beschichtungen, die die plättchenförmigen Effektpigmente enthalten.

Das Patent US 6,281,272 B1 beschreibt eine wässrige Beschichtungszusammensetzung, die ein Vernetzungsmittel und eine Dispersion von polymeren Mikropartikeln in einem wässrigen Medium enthält.

### Aufgabe der Erfindung

Der vorliegenden Erfindung liegt die Aufgabe zugrunde, einen neuen wässrigen Beschichtungsstoff, enthaltend mindestens ein gesättigtes, ungesättigtes und/oder mit olefinisch ungesättigten Verbindungen gepfropftes, Ionisch und/oder nicht Ionisch stabilisiertes Polyurethan, bereitzustellen, der einfach herzustellen Ist und nach der Spritzapplikation auch bei Kontamination mit Silikonen keine Krater mehr aufweist.

Der neue wässrige Beschichtungsstoff soll sich Insbesondere als Wasserbasislack zur Herstellung von farb- und/oder effektgebenden Basislacklerungen von Mehrschichtlackierungen nach dem Nass-in-nass-Verfahren eignen. Dabei sollen auch bei Silikonkontamination der Lackschichten keine Krater mehr ausweisen.

Der neue wässrige Beschichtungsstoff soll Beschichtungen, vorzugsweise farb- und/oder effektgebende Beschichtungen, bevorzugt Basislackierungen und Unidecklackierungen, insbesondere Basislackierungen in Mehrschichtlacklerungen, liefern, die auch bei Kontamination mit Silikonen völlig oder weitestgehend frei von Lackstörungen wie Kratern und vorzugsweise auch von Kochern und Nadelstichen sind.

### Erfindungsgemäße Lösung

Die vorstehend genannten Aufgaben werden durch einen Beschichtungsstoff der eingangs genannten Art gelöst, der dadurch gekennzeichnet ist, dass das Lösemittel einen Löslichkeitsparameter δ < 10 (cal/cm³)^{1/2} und einen Verzweigungsgrad aufweist, der einem Verhältnis der Zahl der CH- und CH₂-Gruppen zu der Zahl der CH₃-Gruppen von mindestens 30:70 entspricht. Unter Löslichkeitsparameter wird hierbei der Hildebrand Löslichkeltsparameter verstanden, der im J. Am. Chem. Soc., 51, S. 66-80, 1929 beschrieben Ist.

Außerdem wurde das neue Verfahren zur Herstellung des erfindungsgemäßen wässrigen Beschichtungsstoffs gefunden, der dadurch gekennzeichnet ist, dass man mindestens ein gesättigtes, ungesättigtes und/oder mit olefinisch ungesättigten Verbindungen gepfropftes, Ionisch und/oder nichtionisch stabilisiertes Polyurethan, mindestens ein Netz- oder Dispergierungsmittel und mindestens ein organisches, aliphatisches unfunktionalisiertes Lösemittel, ausgewählt aus der Gruppe der Kohlenwasserstoffe bestehend aus verzweigten Isomeren des Octans, Nonans, Decans, Undecans, Dodecans, Tridecans, Tetradecans, Pentadecans, Hexadecans, Heptadecans, Octadecans, Nonadecans, Elcosans, Henelcosans, Docosans, Tricosans, Tetracosans, Pentacosans, miteinander mischt.

Nicht zuletzt wurde die neue Verwendung des erfindungsgemäßen Beschichtungsstoffs und des nach dem erfindungsgemäßen Verfahren hergestellten Beschichtungsstoffs für die Herstellung von farb- und/oder effektgebenden Mehrschichtlackierungen gefunden, was im folgenden als »erfindungsgemäße Verwendung« bezeichnet wird.

Weitere Erfindungsgegenstände gehen aus den Patentansprüchen und der folgenden Beschreibung hervor.

### Vorteile der Erfindung

Im Hinblick auf den Stand der Technik ist es überraschend und für den Fachmann nicht vorhersehbar, dass die Aufgabe, die der vorliegenden Erfindung zugrunde liegt, mit Hilfe des erfindungsgemäßen Beschichtungsstoffs, des erfindungsgemäßen Verfahrens und der erfindungsgemäßen Verwendung gelöst wird.

Insbesondere ist es überraschend, dass der erfindungsgemäße Beschichtungsstoff einfach herzustellen ist, keine toxikologisch bedenklichen Bestandteile mehr enthält und nach der Spritzapplikation keine oder nur sehr wenige Krater, Kocher und Nadelstiche aufweist.

Überraschenderweise kann der erfindungsgemäße Beschichtungsstoff im Rahmen der erfindungsgemäßen Verwendung als Wasserbasislack zur Herstellung von farb- und/oder effektgebenden Basislackierungen von Mehrschichtlackierungen nach dem Nass-in-nass-Verfahren verwendet werden. Dabei zeigt die Lackierung auch bei Kontamination mit Silikonen keine oder nur sehr wenige Krater.

Der erfindungsgemäße Beschichtungsstoff liefert im Rahmen der erfindungsgemäßen Verwendung erfindungsgemäße Beschichtungen, vorzugsweise farb- und/oder effektgebende Beschichtungen, bevorzugt Basislackierungen und Unidecklackierungen, insbesondere Basislackierungen in Mehrschichtlackierungen, die auch bei Silikonkontamination völlig oder weitestgehend frei von Lackstörungen wie Kratern, Kochern und Nadelstichen sind. Darüber hinaus weisen sie ein besonders hohes Deckvermögen und einen hervorragenden optischen Gesamteindruck (Appearance) auf. Der erfindungsgemäße Beschichtungsstoff ist daher hervorragend für die Lackierung von Automobilkarosserien geeignet.

### Ausführliche Beschreibung der Erfindung

Der erfindungsgemäße Beschichtungsstoff ist physikalisch, thermisch oder thermisch und mit aktinischer Strahlung härtbar. Dabei kann die thermisch oder thermisch und mit aktinischer Strahlung erfolgende Härtung durch die physikalische Härtung unterstützt werden.

Im Rahmen der vorliegenden Erfindung bedeutet der Begriff "physikalische Härtung" die Härtung einer Schicht aus einem Beschichtungsstoff durch Verfilmung gegebenenfalls nach der Trocknung der Schicht. Üblicherweise sind hierfür keine Vernetzungsmittel notwendig. Gegebenenfalls kann die physikalische Härtung durch Luftsauerstoff oder durch Bestrahlen mit aktinischer Strahlung unterstützt werden.

Im Rahmen der vorliegenden Erfindung bedeutet der Begriff "thermische Härtung" die durch Hitze initiierte Härtung einer Schicht aus einem Beschichtungsstoff, bei der üblicherweise ein separat vorliegendes Vernetzungsmittel angewandt wird. Das Vernetzungsmittel enthält reaktive funktionelle Gruppen, die zu den in den Polyurethanen vorhandenen reaktiven funktionellen Gruppen komplementär sind. Üblicherweise wird dies von der Fachwelt als Fremdvernetzung bezeichnet. Sind bereits die komplementären reaktiven funktionellen Gruppen oder autoreaktive funktionelle Gruppen, d. h. Gruppen, die "mit sich selbst" reagieren, in den Polyurethanen vorhanden, sind diese selbst vernetzend. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28, bis Seite 9, Zeilen 24, bekannt.

Im Rahmen der vorliegenden Erfindung ist unter aktinischer Strahlung elektromagnetische Strahlung wie nahes Infrarot (NIR), sichtbares Licht, UV-Strahlung, Röntgenstrahlung oder gamma-Strahlung, insbesondere UV-Strahlung, und Korpuskularstrahlung wie Elektronenstrahlung, Betastrahlung, Alphastrahlung, Protonenstrahlung oder Neutronenstrahlung, insbesondere Elektronenstrahlung, zu verstehen. Die Härtung durch UV-Strahlung wird üblicherweise durch radikalische oder kationische Photoinitiatoren initiiert.

Werden die thermische Härtung und die Härtung mit aktinischem Licht bei einem erfindungsgemäßen Beschichtungsstoff gemeinsam angewandt, spricht man auch von "Dual Cure".

Der erfindungsgemäße Beschichtungsstoff kann ein Einkomponenten(1K)-System sein.

Im Rahmen der vorliegenden Erfindung kann ein Einkomponenten(1K)-System ein thermisch härtender Beschichtungsstoff sein, bei dem das Bindemittel und das Vernetzungsmittel nebeneinander, d.h. in einer Komponente, vorliegen. Voraussetzung hierfür ist, dass die beiden Bestandteile erst bei höheren Temperaturen und/oder bei Bestrahlen mit aktinischer Strahlung miteinander vernetzen.

Der erfindungsgemäße Beschichtungsstoff kann des weiteren ein Zweikomponenten(2K)- oder Mehrkomponenten(3K, 4K)-System sein.

Im Rahmen der vorliegenden Erfindung ist hierunter ein Beschichtungsstoff zu verstehen, bei dem insbesondere das Bindemittel und das Vernetzungsmittel getrennt voneinander in mindestens zwei Komponenten vorliegen, die erst kurz vor der Applikation zusammengegeben werden. Diese Form wird dann gewählt, wenn Bindemittel und Vernetzungsmittel bereits bei Raumtemperatur miteinander reagieren. Beschichtungsstoffe dieser Art werden vor allem zur Beschichtung thermisch empfindlicher Substrate, insbesondere in der Autoreparaturlackierung, angewandt.

Der erste wesentliche Bestandteil des erfindungsgemäßen Beschichtungsstoffs ist mindestens ein gesättigtes, ungesättigtes und/oder mit olefinisch ungesättigten Verbindungen gepfropftes, ionisch und/oder nicht ionisch stabilisiertes Polyurethan, vorzugsweise auf der Basis aliphatischer, cycloaliphatischer, aliphatischcycloaliphatischer, aromatischer, aliphatisch-aromatischer und/oder cycloaliphatischaromatischer Polyisocanate. Zur Stabilisierung enthält das Polyurethan entweder
- funktionelle Gruppen, die durch Neutralisationsmittel und/oder Quaternisierungsmittel in Kationen überführt werden können, und/oder kationische Gruppen oder
- funktionelle Gruppen, die durch Neutralisationsmittel in Anionen überführt werden können, und/oder anionische Gruppen und/oder
- nicht ionische hydrophile Gruppen

Geeignete Polyurethane sind beispielsweise aus
- der deutschen Patentanmeldung DE 199 14 98 A1, Spalte 1, Zeilen 29 bis 49, und Spalte 4, Zeile 23, bis Spalte 11, Zeile 5,
- der deutschen Patentanmeldung DE 199 48 004 A1, Seite 4, Zeile 19, bis Seite 13, Zeile 48,
- der europäischen Patentanmeldung EP 0 228 003 A1, Seite 3, Zeile 24, bis Seite 5, Zeile 40,
- der europäischen Patentanmeldung EP 0 634 431 A1, Seite 3, Zeile 38, bis Seite 8, Zeile 9, oder
- der internationalen Patentanmeldung WO 92/15405, Seite 2, Zeile 35, bis Seite 10, Zeile 32,
bekannt.

In dem erfindungsgemäßen Beschichtungsstoff sind sie in den üblichen und bekannten Mengen enthalten.

Ist der erfindungsgemäße Beschichtungsstoff physikalisch, thermisch selbst vernetzend oder thermisch selbst vernetzend und mit aktinischer Strahlung härtbar, liegt sein Gehalt an Polyurethanen vorzugsweise bei 50 bis 100 Gew.-%, bevorzugt 50 bis 90 Gew.-% und Insbesondere 50 bis 80 Gew.-%, jeweils bezogen auf den filmbildenden Festkörper des erfindungsgemäßen Beschichtungsstoffs.

Ist der erfindungsgemäße Beschichtungsstoff thermisch fremdvernetzend oder thermisch fremdvernetzend und mit aktinischer Strahlung härtbar, liegt sein Gehalt an Polyurethanen vorzugsweise bei 10 bis 80, bevorzugt 15 bis 75 und insbesondere 20 bis 70 Gew.-%, jeweils bezogen auf den filmbildenden Festkörper des erfindungsgemäßen Beschichtungsstoffs.

Es werden aliphatische Lösemittel, die einen Löslichkeitsparameter δ < 10 (cal/cm³)^{1/2} und einen Verzweigungsgrad, gekennzeichnet durch das Verhältnis der Zahl der CH- und CH₂-Gruppen zu der Zahl der CH₃-Gruppen, von mindestens 30:70 aufweisen, verwendet.

Die organischen Lösemittel sind übliche und bekannte, im Handel erhätliche Produkte. Beispielsweise werden diese unter der Marke Isopar® von der Firma Exxon vertrieben.

Die Menge des organischen Lösemittels kann breit variieren und so optimal den Erfordernissen des Einzelfalls angepasst werden. Im Hinblick auf die wässrige Natur des erfindungsgemäßen Beschichtungsstoffs ist man aber bestrebt, seinen Gehalt an organischem Lösemittel so gering wie möglich zu halten. Hierbei ist es ein besonderer Vorteil, dass ein Gehalt des erfindungsgemäßen Beschichtungsstoffs an organischem Lösemittel von 0,1 bis 10, bevorzugt 0,5 bis 7 und insbesondere 0,5 bis 5 Gew.-%, Jeweils bezogen auf den erfindungsgemäßen Beschichtungsstoff, ausreicht, um die vorteilhaften technischen Effekte der Erfindung zu erzielen.

Darüber hinaus kann der erfindungsgemäße Beschichtungsstoff noch mindestens einen Zusatzstoff enthalten. Vorzugsweise enthält er mindestens zwei Zusatzstoffe. Bevorzugt wird der Zusatzstoff aus der Gruppe der auf dem Gebiet der Beschichtungsstoffe üblicherweise verwendeten Zusatzstoffe ausgewählt. Besonders bevorzugt wird der Zusatzstoff aus der Gruppe, bestehend aus rückstandsfrei oder Im Wesentlichen rückstandsfrei thermisch zersetzbaren Salzen, von den Polyurethanen verschiedenen physikalisch, thermisch und/oder mit aktinischer Strahlung härtbaren Bindemitteln, Vernetzungsmitteln, von den organischen Lösemitteln verschiedenen organischen Lösemitteln, thermisch härtbaren Reaktivverdünnern, mit aktinischer Strahlung härtbaren Reaktivverdünnern, farb- und/oder effektgebenden Pigmenten, transparenten Pigmenten, Füllstoffen, molekulardispers löslichen Farbstoffen, Nanopartikeln, Lichtschutzmitteln, Antioxidantien, Entlüftungsmitteln, Emulgatoren, Slipadditiven, Polymerisationsinhibitoren, Initiatoren der radikalischen Polymerisation, thermolabilen radikalischen Initiatoren; Haftvermittlern, Verlaufmitteln, filmbildenden Hilfsmitteln, wie Verdicker und strukturviskose Sag control agents, SCA, Flammschutzmitteln, Korrosionsinhibitoren, Rieselhilfen, Wachsen, Sikkativen, Bioziden und Mattierungsmitteln, ausgewählt.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- der deutschen Patentanmeldung DE 199 14 98 A1, Spalte 11, Zeile 9, bis Spalte 15, Zeile 63, oder
- dem deutschen Patent DE 100 43 405 C1, Spalte 5, Absätze [0031] bis [0033],
bekannt. Sie werden in den üblichen und bekannten, wirksamen Mengen eingesetzt.

Der Festkörpergehalt des erfindungsgemäßen Beschichtungsstoffs kann sehr breit variieren und daher den Erfordernissen des Einzelfalls optimal angepasst werden. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann. Vorzugsweise liegt der Festkörpergehalt bei 5 bis 70, bevorzugt 10 bis 65 und insbesondere 15 bis 60 Gew.-%, jeweils bezogen auf den erfindungsgemäßen Beschichtungsstoff.

Die Herstellung des erfindungsgemäßen Beschichtungsstoffs erfolgt vorzugsweise mit Hilfe des erfindungsgemäßen Verfahrens. Dabei werden die vorstehend beschriebenen Bestandteile in einem wässrigen Medium, insbesondere in Wasser, dispergiert, wonach man die resultierende Mischung homogenisiert. Methodisch gesehen, weist das erfindungsgemäße Verfahren keine Besonderheiten auf, sondern kann mit Hilfe der üblichen und bekannten Mischverfahren und Mischaggregate, wie Rührkessel, Dissolver, Rührwerksmühlen, Kneter, statischer Mischer oder Extruder, durchgeführt werden.

Besonders bevorzugt werden die erfindungsgemäßen Beschichtungsstoffe als Unidecklacke zur Herstellung einschichtiger Unidecklackierungen oder als Wasserbasislacke zur Herstellung farb- und/oder effektgebender Mehrschichtlackierungen eingesetzt. Ganz besonders bevorzugt werden sie dabei als Wasserbasislacke zur Herstellung farb- und/oder effektgebender Basislackierungen von Mehrschichtlackierungen, bevorzugt Mehrschichtlackierungen für Automobilkarosserien, verwendet. Hierbei sind sie hervorragend für die Erstlackierung (OEM) und die Reparaturlackierung geeignet.

Ganz besonders bevorzugt werden die erfindungsgemäßen Mehrschichtlackierungen durch Nass-in-nass-Verfahren hergestellt, bei denen man
(1) mindestens einen Wasserbasislack auf ein grundiertes oder ungrundiertes Substrat appliziert, wodurch mindestens eine Wasserbasislackschicht (1) resultiert,
(2) mindestens einen Klarlack auf die Wasserbasislackschicht (1) appliziert, wodurch mindestens eine Klarlackschicht (2) resultiert, und
(3) zumindest die Wasserbasislackschicht(en) (1) und die Klarlackschicht(en) (2) gemeinsam härtet, wodurch die Basislackierung (1) und die Klarlackierung (2) resultieren.

Beispiele solcher Nass-in-nass-Verfahren sind aus
- der deutschen Patentanmeldung DE 199 48 004 A1, Seite 17, Zeile 37, bis Seite 19, Zeile 22, oder
- dem deutschen Patent DE 100 43 405 C1, Spalte 3, Absatz [0018], und Spalte 8, Absatz [0052], bis Spalte 9, Absatz [0057], i. V. m. Spalte 6, Absatz [0039], bis Spalte 8, Absatz [0050],
bekannt. Es werden die dort beschriebenen Schichtdicken für die einzelnen Lackierungen der erfindungsgemäßen Mehrschichtlackierung angewandt.

### Beispiele

### Herstellbeispiel 1

### Die Herstellung eines grauen Wasserbasislacks 1

Zur besseren Beurteilung gegebenenfalls auftretender Lackstörungen wurde ein grauer Wasserbasislack verwendet, der nach der folgenden Vorschrift hergestellt wurde.

### Mischung 1a:

In einem Dissolver wurden 26 Gewichtsteile eines anorganischen Verdickungsmittels (Natrium-Magnesium-Schichtsilikat, 3 Gew.-%-ig in Wasser) vorgelegt. Hierzu wurden 30 Gewichtsteile deionisiertes Wasser, 107,5 Gewichtsteile Butylglykol, 4,5 Gewichtsteile eines gemäß Seite 7, Zeile 55, bis Seite 8, Zeile 23, der deutschen Patentanmeldung DE 44 37 535 A1 hergestellten polyurethanmodifizierten Polyacrylates und 0,6 Gewichtsteile einer 20,5 Gew.%-igen Lösung eines handelsüblichen Entschäumers Nopco® DSX 1550 unter Rühren zugegeben. Es resultierte die Mischung 1a.

### Mischung 1b:

Getrennt hiervon wurden 3,2 Gewichtsteile einer gemäß Beispiel D., Spalte 16, Zeilen 37 bis 59, der deutschen Patentanmeldung DE 40 09 858 A1 hergestellten, wässrigen Polyesterharzdispersion, 0,3 Gewichtsteile einer Tensidlösung, enthaltend 52 Gew.-% Surfynol® 104 der Firma Air Products, 55 Gewichtsteile Butylglykol, 4,1 Gewichtsteile eines handelsüblichen, wasserverdünnbaren Melaminformaldehydharzes in n-Butanol (Cymel® 203 der Firma Surface Specialties Austria) und 0,3 Gewichtsteile einer 10 Gew.%-igen Lösung von Dimethylethanolamin in Wasser miteinander vermischt. Es resultierte die Mischung 1 b.

### Mischung 1c:

Die Mischungen 1a und 1b wurden miteinander vermischt. Es resultierte die Mischung 1c.

### Mischung 1d:

Die Mischung 1c wurde mit 6 Gewichtsteilen deionisiertem Wasser, 20,4 Gewichtsteilen eines gemäß Seite 19, Zeile 44, bis Seite 20, Zeile 7, der deutschen Patentanmeldung DE 199 48 004 A1 hergestellten, polyurethanmodifizierten Polyacrylates, 1,6 Gewichtsteilen einer Tensidlösung, enthaltend 52 Gew.-% Surfynol® 104, 48 Gewichtsteilen Butoxyethanol, 0,4 Gewichtsteilen einer 10 Gew.-%-igen Lösung von Dimethylethanolamin in Wasser, 1,6 Gewichtsteilen n-Butanol und 3,9 Gewichtsteilen einer 3 Gew.-%-igen Lösung eines Polyacrylat-Verdickungsmittels (Viscalex® der Firma Ciba) versetzt. Es resultierte die Mischung 1 d.

### Russpaste:

Die Russpaste wurde aus 25 Gewichtsteilen einer gemäß der internationalen Patentanmeldung WO 91/15528 hergestellten Polyacrylatdispersion, 10 Gewichtsteilen Ruß, 0,1 Gewichtsteilen Methylisobutylketon, 1,36 Gewichtsteilen Dimethylethanolamin, 2 Gewichtsteilen eines handelsüblichen Polyethers (Pluriol® P900 der Firma BASF Aktiengesellschaft) und 61,45 Gewichtsteilen deionisiertem Wasser hergestellt.

### Blaupaste 1:

Die Blaupaste 1 wurde aus 19,4 Gewichtsteilen einer nach Spalte 16, Zeilen 10 bis 35, der deutschen Patentanmeldung DE 40 09 858 A1 hergestellten Polyurethandispersion, 13,5 Gewichtsteilen Paliogen® Blau L 6482,4,3 Gewichtsteilen Butoxyethanol, 0,18 Gewichtsteilen Methylethylketon, 0,62 Gewichtsteilen Dimethylethanolamin, 1,2 Gewichtsteilen Pluriol® P900 und 61 Gewichtsteilen Wasser hergestellt.

### Blaupaste 2:

Die Blaupaste 2 wurde aus 15,4 Gewichtsteilen einer gemäß der internationalen Patentanmeldung WO 91/15528 hergestellten Polyacrylatdispersion, 30 Gewichtsteilen Paliogen® Blau L 6470, 2,6 Gewichtsteilen Disperbyk® 184, 1,6 Gewichtsteilen Dipropylenglykolmonomethylether, 0,1 Gewichtsteilen Methylisobutylketon, 0,65 Gewichtsteilen Dimethylethanolamin, 0,8 Gewichtsteilen 1,2-Propylenglykol und 45 Gewichtsteilen deionisiertem Wasser hergestellt.

### Violettpaste:

Die Violettpaste wurden aus 23 Gewichtsteilen einer gemäß Beispiel 1, Seite 14, Zeile 13, bis Seite 15, Zeile 27, der internationalen Patentanmeldung WO 92/15405 hergestellten, wässrigen Polyurethandispersion, 18,4 Gewichtsteilen Quindo Violet® 19 228-6902,5 Gewichtsteilen Butylglykol, 0,2 Gewichtsteilen Methylethylketon, 0,26 Gewichtsteilen Dimethylethanolamin, 2 Gewichtsteilen Pluriol® P900 und 51 Gewichtsteilen deionisiertem Wasser hergestellt.

### Pastenmischung:

Die Pastenmischung wurde aus 2,5 Gewichtsteilen der Russpaste, 1,0 Gewichtsteilen der Blaupaste 1, 0,3 Gewichtsteilen der Blaupaste 2, 0,75 Gewichtsteilen der Violettpaste und 0,5 Gewichtsteilen einer nach Beispiel 1 der deutschen Patentanmeldung DE 100 04 494 A1 hergestellten, Paste hergestellt.

### Mischung 1e:

Die Mischung 1e wurde aus der Pastenmischung und der Mischung 1d hergestellt.

### Aluminiumeffektpigmentpaste:

Die Aluminiumeffektpigmentpaste wurde aus 0,18 Gewichtsteilen aus einer ersten 65 Gew.-%-igen Aluminiumeffektpigment-Anteigung (Alu-Stapa-Hydrolux® 2153 der Firma Eckart) und einer zweiten 65 Gew.-%-igen Aluminiumeffektpigment-Anteigung (Alu-Starter-Hydrolux 8154 der Firma Eckart), 0,55 Gewichtsteilen Butylglykol und 0,28 Gewichtsteilen der gemäß Beispiel D., Spalte 16, Zeilen 37 bis 59, der deutschen Patentanmeldung DE 40 09 858 A1 hergestellten, wässrigen Polyesterharzdispersion hergestellt.

### Wasserbasislack 1:

Der Wasserbasislack 1 wurde aus der Mischung 1 e, der Aluminiumeffektpigmentpaste und zwei Gewichtsteilen Wasser hergestellt. Anschließend wurde er mit Dimethylethanolamin auf einen pH-Wert von 8 und mit deionisiertem Wasser auf eine Viskosität von 58 mPas bei einer Scherbelastung von 1.000/Sekunde und 23°C eingestellt.

### Wasserbasislack V1:

Zur Herstellung des Wasserbasislacks V1 wurde der Wasserbasislack 1 des Herstellbeispiels 1 mit 0.1 ppm Wacker Silikonöl AK 1000® versetzt.

### Wasserbasislack E2:

Zur Herstellung des erfinderischen Wasserbasislacks E2 wurde der Wasserbasislack V1 mit dem kommerziell erhältlichen Lösemittel Isopar L® versetzt.

**Tabelle 1: Zusammensetzung der Wasserbasislacke V1 und E2**

| **WBL** | **[Gew.-%]** | **Lösemittel** |
|---|---|---|
| V1 | - | - |
| E2 | 2,5 | Isopar L® |

Die Gewichtsprozentangaben der Tabelle 1 beziehen sich auf den jeweiligen Wasserbasislack.

Zur Bestimmung der Krater wurden die Mehrschichtlackierungen V1 und E2 nach der folgenden allgemeinen Vorschrift hergestellt:
Ein Aluminiumblech der Abmessungen 40 x 40 cm wurde mit einer Schichtdicke von 8-12µm, die geringer als die Prozessschichtdicke ist, appliziert. Anschließend wurde das resultierende Blech 10 Minuten bei 80°C getrocknet und auf die getrocknete Wasserbasislackschicht wurde ein üblicher und bekannter Zweikomponentenklarlack appliziert. Anschließend wurden die Wasserbasislackschicht und Klarlackschicht in einem Umluftofen während 20 Minuten bei 140°C gehärtet. Die Anzahl der Krater in der Mehrschichtlackierung wurde visuell bestimmt. Die Tabelle 2 gibt einen Überblick über die Versuchsergebnisse.

**Tabelle 2: Krater in den Mehrschichtlackierungen V1 und E2**

| **Beispiel/Vergleichsversuch** | **Summe der Krater auf 3 Blechen** | **Note** |
|---|---|---|
| V1 | 311 | niO |
| E2 | 0 | iO |

Die Versuchsergebnisse der Tabelle 2 untermauern, dass die organischen Lösemittel in Lackierungen von Silikon kontaminierten wässrigen Lacken eine Krater reduzierende beziehungsweise vermeidende Wirkung aufweisen.

### Herstellbeispiel 2

### Die Herstellung des Wasserbasislacks V3

Zur Herstellung des Wasserbasislacks V3 wurde der Wasserbasislack V1 des Herstellbeispiels 1 mit 2,5 Gew.-% Shellsol T® der Firma Shell vermischt und mit deionisiertem Wasser auf eine Viskosität von 70 bis 75 mPas bei einer Scherbelastung von 1.000/Sekunde bei 23°C eingestellt.

### Vergleichsversuch zwischen E2 und V3

Zur Bestimmung der Nadelstichgrenze und der Nadelstichanzahl wurden die Mehrschichtlackierungen nach der folgenden allgemeinen Vorschrift hergestellt:
Ein mit einer Füllerlackierung beschichtetes Stahlblech der Abmessungen 30 x 50 cm wurde an einer Längskante mit einem Klebstreifen versehen, um nach der Beschichtung die Schichtdickendifferenzen ermitteln zu können. Der Wasserbasislack wurde keilförmig elektrostatisch appliziert. Die resultierende Wasserbasislackschicht wurde während einer Minute bei Raumtemperatur abgelüftet und anschließend während 10 Minuten im Umluftofen bei 70°C getrocknet. Auf die getrocknete Wasserbasislackschicht wurde ein üblicher und bekannter Zweikomponentenklarlack appliziert. Die resultierende Klarlackschicht wurde während 20 Minuten bei Raumtemperatur abgelüftet. Anschließend wurden die Wasserbasislackschicht und die Klarlackschicht in einem Umluftofen während 20 Minuten bei 140°C gehärtet. Nach der visuellen Auswertung der Nadelstiche in der resultierenden keilförmigen Mehrschichtlackierung wurde die Schichtdicke der Nadelstichgrenze bestimmt. Die Ergebnisse finden sich in der Tabelle 3.

**Tabelle 3: Nadelstichgrenze und Nadelstichanzahl von V3 und E2**

| **Beispiel/Vergleichsversuch** | **Nadelstichgrenze (µm)** | **Nadelstichanzahl** |
|---|---|---|
| V3 | 19 | 34 |
| E2 | 21 | 5 |

Die Ergebnisse untermauern, dass der Einsatz des organischen Lösemittels Isopar die Nadelstichgrenze signifikant erhöht im Vergleich zum kommerziell erhältlichen Shellsol und gleichzeitig die Nadelstichanzahl signifikant senkt.

### Herstellbeispiel 3

### Die Herstellung des Wasserbasislacks V1-1

Zur Herstellung des Wasserbasislacks V1-1 wurde der Wasserbasislack 1 des Herstellbeispiels 1 mit 0.06 ppm Wacker Silikonöl AK 1000® versetzt.

### Die Herstellung des Wasserbasislacks E3

Zur Herstellung des erfindungsgemäßen Wasserbasislacks E3 wurde der Wasserbasislack V1-1 mit 2,5 Gew.-%, bezogen auf den gesamten Wasserbasislack E3, des kommerziell erhältlichen Lösemittels Dodecan versetzt.

### Vergleichsversuch zwischen V1-1 und E3

Zur Bestimmung der Krater wurden die Mehrschichtlackierungen V1-1 und E3 nach der im Herstellbeispiel 1 angegebenen allgemeinen Vorschrift hergestellt.

Die Anzahl der Krater in der Mehrschichtlackierung wurde visuell bestimmt. Die Tabelle 4 gibt einen Überblick über die Versuchsergebnisse.

**Tabelle 4: Krater in den Mehrschichtlackierungen V1-1 und E3**

| **Beispiel/Vergleichsversuch** | **Summe der Krater auf 3 Blechen** | **Note** |
|---|---|---|
| V1-1 | 93 | niO |
| E3 | 2 | iO |

Die Versuchsergebnisse der Tabelle 4 untermauern, dass die organischen Lösemittel in Lackierungen von Silikon kontaminierten wässrigen Lacken eine Krater reduzierende beziehungsweise vermeidende Wirkung aufweisen.

### Herstellbeispiel 4

### Die Herstellung des Wasserbasislacks V1-2

Zur Herstellung des Wasserbasislacks V1-2 wurde der Wasserbasislack 1 des Herstellbeispiels 1 mit 0.1 ppm Wacker Silikonöl AK 1000® versetzt.

### Die Herstellung des Wasserbasislacks E4

Zur Herstellung des erfindungsgemäßen Wasserbasislacks E4 wurde der Wasserbasislack V1-2 mit 2,5 Gew.-%, bezogen auf den gesamten Wasserbasislack E4, des kommerziell erhältlichen Lösemittels Exxsol D 60® versetzt.

### Vergleichsversuch zwischen V1-2 und E4

Zur Bestimmung der Krater wurden die Mehrschichtlackierungen V1-2 und E4 nach der im Herstellbeispiel 1 angegebenen allgemeinen Vorschrift hergestellt.

Die Anzahl der Krater in der Mehrschichtlackierung wurde visuell bestimmt. Die Tabelle 5 gibt einen Überblick über die Versuchsergebnisse.

**Tabelle 5: Krater in den Mehrschichtlackierungen V1-2 und E4**

| **Beispiel/Vergleichsversuch** | **Summe der Krater auf 3 Blechen** | **Note** |
|---|---|---|
| V1-2 | 266 | niO |
| E4 | 7 | iO |

Die Versuchsergebnisse der Tabelle 5 untermauern, dass die organischen Lösemittel in Lackierungen von Silikon kontaminierten wässrigen Lacken eine Krater reduzierende beziehungsweise vermeidende Wirkung aufweisen.

## Patentansprüche

1. Wässriger Beschichtungsstoff, enthaltend mindestens ein gesättigtes, ungesättigtes und/oder mit olefinisch ungesättigten Verbindungen gepfropftes, ionisch und/oder nicht Ionisch stabilisiertes Polyurethan und mindestens ein organisches, aliphatisches, unfunktionalisiertes Lösemittel, **dadurch gekennzeichnet, dass** das Lösemittel einen Löslichkeitsparameter δ < 10 (cal/cm³)^{1/2} und einen Verzweigungsgrad aufweist, der einem Verhältnis der Zahl der CH- und CH₂-Gruppen zu der Zahl der CH₃-Gruppen von mindestens 30:70 entspricht.

2. Beschichtungsstoff nach Anspruch 1, **dadurch gekennzeichnet, dass** der Verzweigungsgrad einem Verhältnis der Zahl der CH- und CH₂-Gruppen zu der Zahl der CH₃-Gruppen von 40:60, bevorzugt 45:55 entspricht.

3. Beschichtungsstoff nach Anspruch 1 oder 2, **dadurch gekennzeichnet, dass** das organische, aliphatische, unfunktionalisierte, verzweigte Lösemittel bei 25°C flüssig Ist und eine Kohlenstoffanzahl von 7 bis 25 aufweist.

4. Beschichtungsstoff nach Anspruch 1 oder 2, **dadurch gekennzeichnet, dass** das organische, aliphatische, unfunktionalisierte Lösemittel aus der Gruppe der Kohlenwasserstoffe, bestehend aus verzweigten Isomeren des Octans, Nonans, Decans, Undecans, Dodecans, Tridecans, Tetradecans, Pentadecans. Hexadecans, Heptadecans, Octadecans, Nonadecans, Elcosans, Heneicosans, Docosans, Tricosans, Tetracosans, Pentacosans ausgewählt ist.

5. Wässriger Beschichtungsstoff nach einem der Ansprüche 1 bis 4, **dadurch gekennzeichnet, dass** er mindestens einen Zusatzstoff enthält.

6. Wässriger Beschichtungsstoff nach Anspruch 5, **dadurch gekennzeichnet, dass** der Zusatzstoff aus der Gruppe, bestehend aus rückstandsfrei oder im Wesentlichen rückstandsfrei thermisch zersetzbaren Salzen, von den Polyurethanen verschiedenen physikalisch, thermisch und/oder mit aktinischer Strahlung härtbaren Bindemitteln, Vernetzungsmitteln, von den organischen Lösemitteln verschiedenen organischen Lösemitteln, thermisch härtbaren Reaktivverdünnern, mit aktinischer Strahlung härtbaren Reaktivverdünnern, farb- und/oder effektgebenden Pigmenten, transparenten Pigmenten, Füllstoffen, molekulardispers löslichen Farbstoffen, Nanopartikeln, Lichtschutzmitteln, Antioxidantien, Entlüftungsmitteln, Emulgatoren, Slipadditiven, Polymerisationsinhibitoren, Initiatoren der radikalischen Polymerisation, thermolabilen radikalischen Initiatoren, Haftvermittlern, Verlaufmitteln, filmbildenden Hilfsmitteln, Reologiehilfsmitteln, Korrosionsinhibitoren, Rieselhilfen, Wachsen, Sikkativen, Bioziden und Mattierungsmitteln, ausgewählt ist.

7. Verfahren zur Herstellung des wässrigen Beschichtungsstoffs, gemäß einem der Ansprüche 1 bis 6, **dadurch gekennzeichnet, dass** man mindestens ein gesättigtes, ungesättigtes und/oder mit olefinisch ungesättigten Verbindungen gepfropftes, ionisch und/oder nichtionisch stabilisiertes Polyurethan, mindestens ein Netz- oder Dispergierungsmittel und mindestens ein organisches, aliphatisches unfunktionalisiertes Lösemittel, ausgewählt aus der Gruppe der Kohlenwasserstoffe bestehend aus verzweigten Isomeren des Octans, Nonans, Decans, Undecans, Dodecans, Tridecans, Tetradecans, Pentadecans, Hexadecans, Heptadecans, Octadecans, Nonadecans, Eicosans, Henelcosans, Docosans, Tricosans, Tetracosans, Pentacosans, miteinander mischt.

8. Verwendung des wässrigen Beschichtungsstoffs, gemäß einem der Ansprüche 1 bis 7 und des nach dem Verfahren gemäß Anspruch 7 hergestellten wässrigen Beschichtungsstoffs, **dadurch gekennzeichnet, dass** der wässrige Beschichtungsstoff als Wasserbasislack für die Herstellung von farb- und/oder effektgebenden Mehrschichtlackierungen verwendet wird.

9. Verwendung nach Anspruch 8, **dadurch gekennzeichnet, dass** die farb- und/oder effektgebenden Mehrschichtlackierungen nach dem Nass-in-nass-Verfahren hergestellt werden.

10. Verwendung nach einem der Ansprüche 8 bis 9, **dadurch gekennzeichnet, dass** die Substrate Automobilkarosserien oder Teile davon sind.

## Claims

1. Aqueous coating material comprising at least one ionically and/or nonionically stabilized polyurethane which is saturated, unsaturated and/or grafted with olefinically unsaturated compounds, and at least one organic, aliphatic, non-functionalized solvent, **characterized in that** the solvent has a solubility parameter δ < 10 (cal/cm³)^{1/2} and a degree of branching which corresponds to a ratio of the number of CH and CH₂ groups to the number of CH₃ groups of at least 30:70.

2. Coating material according to Claim 1, **characterized in that** the degree of branching corresponds to a ratio of the number of CH and CH₂ groups to the number of CH₃ groups of 40:60, preferably 45:55.

3. Coating material according to Claim 1 or 2, **characterized in that** the organic, aliphatic, non-functionalized, branched solvent is liquid at 25°C and has a carbon number of 7 to 25.

4. Coating material according to Claim 1 or 2, **characterized in that** the organic, aliphatic, non-functionalized solvent is selected from the group of the hydrocarbons consisting of branched isomers of octane, nonane, decane, undecane, dodecane, tridecane, tetradecane, pentadecane, hexadecane, heptadecane, octadecane, nonadecane, eicosane, heneicosane, docosane, tricosane, tetracosane, pentacosane.

5. Aqueous coating material according to any of Claims 1 to 4, **characterized in that** it comprises at least one additive.

6. Aqueous coating material according to Claim 5, **characterized in that** the additive is selected from the group consisting of salts which can be decomposed thermally without residue or substantially without residue, binders different from the polyurethanes and curable physically, thermally and/or with actinic radiation, crosslinking agents, organic solvents different from the organic solvents, reactive diluents curable thermally, reactive diluents curable with actinic radiation, colour and/or effect pigments, transparent pigments, fillers, molecularly dispersely soluble dyes, nanoparticles, light stabilizers, antioxidants, devolatilizing agents, emulsifiers, slip additives, polymerization inhibitors, free-radical polymerization initiators, thermolabile free-radical initiators, adhesion promoters, flow control agents, film-forming assistants, rheological assistants, corrosion inhibitors, free-flow aids, waxes, siccatives, biocides and matting agents.

7. Process for preparing the aqueous coating material according to any of Claims 1 to 6, **characterized in that** at least one ionically and/or nonionically stabilized polyurethane which is saturated, unsaturated and/or grafted with olefinically unsaturated compounds, at least one wetting agent or dispersant and at least one organic, aliphatic, non-functionalized solvent selected from the group of the hydrocarbons consisting of branched isomers of octane, nonane, decane, undecane, dodecane, tridecane, tetradecane, pentadecane, hexadecane, heptadecane, octadecane, nonadecane, eicosane, heneicosane, docosane, tricosane, tetracosane, pentacosane are mixed with one another.

8. Use of the aqueous coating material according to any of Claims 1 to 7 and of the aqueous coating material prepared by the process according to Claim 7, **characterized in that** the aqueous coating material is used as aqueous basecoat material for producing multi-coat colour and/or effect paint systems.

9. Use according to Claim 8, **characterized in that** the multi-coat colour and/or effect paint systems are produced by the wet-on-wet method.

10. Use according to either of Claims 8 and 9, **characterized in that** the substrates are car bodies or parts thereof.

## Revendications

1. Matière aqueuse de revêtement, contenant au moins un polyuréthane saturé, insaturé et/ou greffé avec des composés à insaturation oléfinique, stabilisé par voie ionique et/ou non ionique, et au moins un solvant organique, aliphatique, non fonctionnalisé, **caractérisé en ce que** le solvant présente un paramètre de solubilité δ < 10 (cal/cm³)^{1/2} et un degré de ramification qui correspond à un rapport du nombre des groupes CH et CH₂ au nombre des groupes CH₃ d' au moins 30:70.

2. Matière de revêtement selon la revendication 1, **caractérisée en ce que** le degré de ramification correspond à un rapport du nombre des groupes CH et CH₂ au nombre des groupes CH₃ de 40:60, de préférence de 45:55.

3. Matière de revêtement selon la revendication 1 ou 2, **caractérisée en ce que** le solvant organique, aliphatique, ramifié, non fonctionnalisé est liquide à 25 °C et présente un indice de carbone de 7 à 25.

4. Matière de revêtement selon la revendication 1 ou 2, **caractérisée en ce que** le solvant organique, aliphatique, non fonctionnalisé est choisi dans le groupe des hydrocarbures consistant en des isomères ramifiés de l'octane, du nonane, du décane, de l'undécane, du dodécane, du tridécane, du tétradécane, du pentadécane, de l'hexadécane, de l'heptadécane, de l'octadécane, du nonadécane, de l'eicosane, de l'hénéicosane, du docosane, du tricosane, du tétracosane, du pentacosane.

5. Matière aqueuse de revêtement selon l'une quelconque des revendications 1 à 4, **caractérisée en ce qu'**elle contient au moins un additif.

6. Matière aqueuse de revêtement selon la revendication 5, **caractérisée en ce que** l'additif est choisi dans le groupe consistant en des sels décomposables thermiquement sans résidu ou pratiquement sans résidu, des liants durcissables physiquement, thermiquement et/ou par un rayonnement actinique, différents des polyuréthanes, des agents de réticulation, des solvants organiques différents des solvants organiques, des diluants réactifs durcissables thermiquement, des diluants réactifs durcissables par un rayonnement actinique, des pigments colorants et/ou à effet, des pigments transparents, des charges, des colorants solubles en dispersion moléculaire, des nanoparticules, des photoprotecteurs, des antioxydants, des agents de désaération, des émulsifiants, des additifs de glissement, des inhibiteurs de polymérisation, des amorceurs de la polymérisation radicalaire, des amorceurs radicalaires thermolabiles, des promoteurs d'adhérence, des agents d'étalement, des adjuvants filmogènes, des adjuvants de rhéologie, des agents anticorrosion, des antiagglomérants, des cires, des siccatifs, des biocides et des agents de matité.

7. Procédé pour la préparation de la matière aqueuse de revêtement selon l'une quelconque des revendications 1 à 6, **caractérisé en ce qu'**on mélange entre eux au moins un polyuréthane saturé, insaturé et/ou greffé avec des composés à insaturation oléfinique, stabilisé par voie ionique et/ou non ionique, au moins un agent mouillant ou dispersant et au moins un solvant organique, aliphatique, non fonctionnalisé, choisi dans le groupe des hydrocarbures consistant en des isomères ramifiés de l'octane, du nonane, du décane, de l'undécane, du dodécane, du tridécane, du tétradécane, du pentadécane, de l'hexadécane, de l'heptadécane, de l'octadécane, du nonadécane, de l'eicosane, de l'hénéicosane, du docosane, du tricosane, du tétracosane, du pentacosane.

8. Utilisation de la matière aqueuse de revêtement selon l'une quelconque des revendications 1 à 7 et de la matière aqueuse de revêtement préparée conformément au procédé selon la revendication 7, **caractérisée en ce que** la matière aqueuse de revêtement est utilisée en tant que peinture de fond à l'eau pour la production de revêtements de peinture multicouches colorants et/ou à effet.

9. Utilisation selon la revendication 8, **caractérisée en ce que** les revêtements de peinture multicouche colorants et/ou à effet sont produits selon le procédé humide-sur-humide.

10. Utilisation selon l'une quelconque des revendications 8 et 9, **caractérisée en ce que** les subjectiles sont des carrosseries d'automobiles ou des parties de celles-ci.
